# EUROPÄISCHE PATENTSCHRIFT

(11) **EP 2 326 234 B1**
(45) Veröffentlichungstag und Bekanntmachung des Hinweises auf die Patenterteilung: **23.09.2015**
(21) Anmeldenummer: 09781172.3
(22) Anmeldetag: 28.07.2009
(51) Int. Cl.: A47L 15/42, A47L 15/48

(54) **VERFAHREN ZUM BETREIBEN EINER GESCHIRRSPÜLMASCHINE**
METHOD FOR OPERATION OF A DISHWASHER
PROCÉDÉ DE FONCTIONNEMENT D'UN LAVE-VAISSELLE

(30) Priorität: 28.07.2008 DE 102008040789; 07.11.2008 DE 102008043550
(43) Veröffentlichungstag der Anmeldung: 01.06.2011
(73) Patentinhaber: BSH Hausgeräte GmbH, 81739 München (DE)
(72) Erfinder: FAUTH, Michael, 91785 Pleinfeld (DE); JERG, Helmut, 89537 Giengen (DE); PAINTNER, Kai, 86477 Adelsried (DE); REITER, Andreas, 89435 Finningen (DE); RIEGER, Roland, 73492 Rainau (DE)
(86) Internationale Anmeldenummer: PCT/EP2009/059723
(87) Internationale Veröffentlichungsnummer: WO 2010/012716

(56) Entgegenhaltungen:
- EP-A2- 1 415 587
- EP-A2- 1 415 588
- EP-A2- 1 690 489
- DE-A1-102005 004 089
- DE-A1-102005 004 095
- DE-A1-102005 004 096

## Beschreibung

Die Erfindung betrifft ein Verfahren zum Betreiben einer Geschirrspülmaschine, insbesondere einer Haushalts-Geschirrspülmaschine, nach dem Oberbegriff des Patentanspruchs 1.

Es sind Geschirrspülmaschinen bekannt, die Spülprogramme durchlaufen, die eine Mehrzahl von Programmschritten umfassen, wie z.B. Vorspülen, Reinigen, Zwischenspülen, Klarspülen und Trocknen des gereinigten Spülguts. Dabei wird während einiger der Pogrammschritte, wie z.B. dem Vorspülen oder Reinigen, Flüssigkeit mit einem als Durchlauferhitzer ausgebildeten Heizmittel erwärmt, wobei es sich um die gleiche Flüssigkeitsmenge, die zweimal mit dem Durchlauferhitzer erwärmt wird, oder um zwei Flüssigkeitsmengen handeln kann. Die Erwärmung mit einem Durchlauferhitzer erlaubt ein rasches Erwärmen der Flüssigkeit, was jedoch gerade empfindliches Spülgut besonderen Belastungen aussetzt. Eine derartige Geschirrspülmaschine ist zum Beispiel aus der DE 10 2005 004 089 A1 bekannt.

Ferner offenbart die EP 1 415 587 A2 eine Geschirrspülmaschine deren Wasch- und Spülwasser mit einer Luftheizung erwärmbar ist, wobei die Luftheizung entfernt von einem Innenraum der Geschirrspülmaschine vorgesehen ist, wodurch auf eine Heizung verzichtet werden kann, die innerhalb des Wasch- und Spülwassers vorgesehen sein muss.

Der Erfindung liegt die Aufgabe zugrunde, die thermischen Belastungen insbesondere von empfindlichem Spülgut zu reduzieren.

Die Aufgabe der Erfindung ist durch ein Verfahren zum Betreiben einer Geschirrspülmaschine gemäß Anspruch 1 und/oder gemäß Anspruch 3, sowie mittels einer Geschirrspülmaschine gemäß Anspruch 13 und/oder gemäß Anspruch 14 gelöst. - Vorteilhafte Weiterbildungen, zusätzliche Merkmale und/oder Vorteile der Erfindung ergeben sich aus den abhängigen Ansprüchen und der folgenden Beschreibung der Erfindung.

Die Erfindung geht aus von einem Verfahren zum Betreiben einer Geschirrspülmaschine, insbesondere einer Haushalts-Geschirrspülmaschine, bei dem mit einem ersten Heizmittel Flüssigkeit wenigstens zweimal erwärmt wird. Erfindungsgemäß ist dabei vorgesehen, dass als erstes Heizmittel eine Luftheizung verwendet wird. Es wird also die Luftheizung wenigstens zweimal während eines Spülprogramms betrieben, um eine Erwärmung einer oder von zwei Flüssigkeitsmenge zu bewirken. Dies erlaubt eine das Spülgut schonende Erwärmung. Bei dem erfindungsgemäßen Verfahren werden ferner eine Mehrzahl von Programmschritten durchlaufen, wobei das erste Heizmittel wenigstens zeitweise während wenigstens zwei Programmschritten betrieben wird, und eine Desorptionsphase eines reversibel dehydrierbaren Trocknungsmittels, insbesondere Zeolith, eines Sorptionstrocknungssystems auf wenigstens zwei Programmschritte verteilt wird, wobei während eines Klarspülschritts eine Erwärmung der Flüssigkeit durch das erste Heizmittel erfolgt, wodurch eine bisher in einem Programmverlauf nicht vollständig erfolgte Desorption vollendet werden kann

In einer Weiterbildung ist vorgesehen, dass als zweites Heizmittel eine Wasserheizung verwendet wird. Dies erlaubt eine weitere, schnellere Erwärmung ohne Verlängerung der Spülprogrammdauer.

Bei dem zweiten erfindungsgemäßen Verfahren wird wieder mit einem ersten Heizmittel Flüssigkeit wenigstens zweimal erwärmt, wobei als erstes Heizmittel ebenfalls eine Luftheizung verwendet wird. Bei dem erfindungsgemäßen Verfahren werden ferner wiederum eine Mehrzahl von Programmschritten durchlaufen, wobei das erste Heizmittel ebenfalls wenigstens zeitweise während wenigstens zwei Programmschritten betrieben wird, wobei eine Desorptionsphase eines reversibel dehydrierbaren Trocknungsmittels, insbesondere Zeolith, eines Sorptionstrocknungssystems wiederum auf wenigstens zwei Programmschritte verteilt wird, und als ein zweites Heizmittel eine Wasserheizung verwendet wird und das zweite Heizmittel wenigstens zeitweise während wenigstens zwei Programmschritten betrieben wird.

In einer Weiterbildung des zweiten erfindungsgemäßen Verfahrens ist vorgesehen, dass während eines Klarspülschritts eine Erwärmung der Flüssigkeit durch das erste Heizmittel erfolgt, wodurch eine bisher in einem Programmverlauf nicht vollständig erfolgte Desorption vollendet werden kann.

Gemäß der Erfindung erfolgt während des Aufheizens mit der Luftheizung wenigstens teilweise die Desorption des reversibel dehydrierbaren Trocknungsmaterials. Somit erfolgt die Desorption in zwei Phasen, die z.B. durch einen vollständigen oder teilweisen Flüssigkeitswechsel durch Abpumpen und Neubefüllen, voneinander getrennt sind. So ist eine vollständige Desorption des Trocknungsmaterials auch dann gewährleistet, wenn die Zeitdauer eines ersten Programmschritts nicht ausreicht, um eine vollständige Desorption zu erreichen.

Ferner ist in einer Weiterbildung vorgesehen, dass das zweite Heizmittel nur wenigstens zeitweise während eines Programmschritts betrieben wird. Somit wird ein besonders energieeffizienter Betrieb der Geschirrspülmaschine möglich.

Dabei ist in einer Weiterbildung vorgesehen, dass zwischen den wenigstens zwei Programmschritten wenigstens ein wenigstens teilweiser Flüssigkeitswechsel durch Abpumpen und Neubefüllen erfolgt.

Ferner ist in einer Weiterbildung vorgesehen, dass als erster Programmschritt ein Vorspülen mit Reinigungswirkung ohne Reinigerzugabe und als zweiter Programmschritt ein Reinigen mit Reinigerzugabe und Reinigungswirkung durchgeführt wird. Dies erlaubt eine besonderes intensive Reinigung von Spülgut, da bereits während des Programmschritts Vorspülen das Spülgut mit erwärmter Flüssigkeit beaufschlagt wird.

In einer Weiterbildung ist vorgesehen, dass als erster Programmschritt ein Reinigen mit Reinigerzugabe und Reinigungswirkung und als zweiter Programmschritt ein Klarspülen mit Klarspülerzugabe durchgeführt wird. Dies bewirkt eine besonders gute Trocknung von Spülgut, den vor dem Programmschritt Trocken erfolgt während des Programmschritts Klarspülen eine Beaufschlagung von Spülgut mit erwärmter Flüssigkeit.

In einer Weiterbildung ist vorgesehen, dass mit dem ersten Heizmittel Flüssigkeit auf eine maximale Temperatur im Wesentlich zwischen 35°C bis 50°C, insbesondere zwischen 40°C bis 45°C, aufgeheizt wird. Mit Erreichen dieser Temperaturen kann verbesserte Reinigungswirkung während eines Programmschritts Vorspülen und/oder eine Verbesserung der Trocknungsleistung während eines Programmschritts Trocknen erreicht werden.

In einer Weiterbildung ist vorgesehen, dass mit dem zweiten Heizmittel Flüssigkeit auf eine maximale Temperatur im Wesentlichen zwischen 45°C bis 80°C, vorzugsweise 55°C bis 75°C, aufgeheizt wird. So wird eine im Wesentlichen vollständige Desorption des Trocknungsmaterials sichergestellt.

Dabei ist in einer Weiterbildung vorgesehen, dass die Betriebsdauer des erstes Heizmittel während des ersten Programmschritts zwei bis sechs, vorzugsweise drei bis vier mal so lang wie während des zweiten Programmschritts ist.

Ferner wird die Aufgabe der Erfindung durch eine jeweilige Geschirrspülmaschine, insbesondere eine Haushalts-Geschirrspülmaschine, mit einem ersten Heizmittel gelöst, mit dem Flüssigkeit wenigstens zweimal erwärmbar ist, wobei erfindungsgemäß vorgesehen ist, dass das erste Heizmittel als eine Luftheizung ausgebildet ist. Hierbei ist die jeweilige Geschirrspülmaschine derart ausgebildet, dass mittels dieser ein erfindungsgemäßes Verfahren durchführbar ist und/oder durchgeführt wird.

Die Erfindung und ihre Weiterbildung werden nachfolgend anhand von Zeichnungen näher erläutert.

Es zeigen:
- Fig. 1: eine schematische Darstellung eines Ausführungsbeispiels einer erfindungsgemäßen Geschirrspülmaschine mit einem Sorptionstrocknungssystem,
- Fig. 2: eine schematische Darstellung des Temperaturverlaufs während eines ersten Ausführungsbeispiels eines Spülprogrammdurchlaufs. Es handelt sich bei diesem Spülprogrammdurchlauf nicht um einen Teil der Erfindung, sondern um einen Stand der Technik, der das Verständnis der Erfindung erleichtert.
- Fig. 3: eine schematische Darstellung des Temperaturverlaufs eines weiteren, zweiten Ausführungsbeispiels eines erfindungsgemäßen Spülprogrammdurchlaufs, und
- Fig. 4: eine schematische Darstellung des Temperaturverlaufs eines weiteren, dritten Ausführungsbeispiels eines erfindungsgemäßen Spülprogrammdurchlaufs.

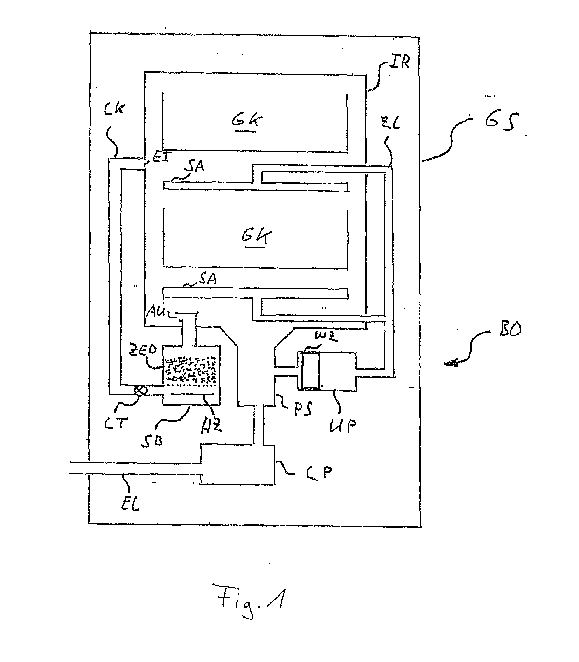

Es wird zunächst auf Figur 1 Bezug genommen.

Eine im vorliegenden Ausführungsbeispiel als Haushalts-Geschirrspülmaschine ausgebildete Geschirrspülmaschine GS weist einen als Spülbehälter dienenden Innenraum IR auf, der mittels einer an der Geschirrspülmaschine GS schwenkbar angelenkten Tür (nicht dargestellt) zum Beladen und Entladen geöffnet bzw. geschlossen werden kann. In dem Innenraum IR der Geschirrspülmaschine GS sind Geschirrkörbe GK zur Aufnahme von zu reinigendem Spülgut vorgesehen, die aus dem Innenraum IR der Geschirrspülmaschine GS herausgezogen werden können, um das Be- und Entladen zu erleichtern.

Um das in den Geschirrkörben GK gelagerte Spülgut zu reinigen sind in dem Innenraum IR der Geschirrspülmaschine GS als Sprüharme SA ausgebildete Mittel zur Beaufschlagung von Spülgut mit Flüssigkeit vorgesehen, wobei es sich bei der Flüssigkeit um z.B. mit Reinigungsmitteln oder mit Klarspüler versetztes Wasser handeln kann, um so eine Reinigungswirkung bzw. streifenfreie Trocknung zu bewirken. Die vom Spülgut herabfließende Flüssigkeit sammelt sich in einem Pumpensumpf PS, der im Bodenbereich des Innenraumes IR der Geschirrspülmaschine GS angeordnet ist.

Die Sprüharme SA sind über eine Zuführleitung ZL mit einer Umwälzpumpe UP flüssigkeitsleitend verbunden, die neben anderen Bauteilkomponenten der Geschirrspülmaschine GS in einer Bodenbaugruppe BO unterhalb des Innenraums IR der Geschirrspülmaschine GS angeordnet ist. Im Betrieb, d.h. bei laufender Umwälzpumpe UP, saugt die Umwälzpumpe UP die sich in dem Pumpensumpf PS angesammelte Flüssigkeit an und fördert diese durch die Zuführleitung ZL zu den Sprüharmen SA. Um die durch den Betrieb der Umwälzpumpe UP umgewälzte Flüssigkeit zu erwärmen weist die Umwälzpumpe eine integrierte Wasserheizung WZ zur Erwärmung der Flüssigkeit auf. Alternativ kann neben der Umwälzpumpe UP ein separater Durchlauferhitzer oder eine andere Wasserheizung vorgesehen sein. Zum Entleeren des Innenraums IR der Geschirrspülmaschine GS ist eine Laugenpumpe LP vorgesehen, die ebenfalls in flüssigkeitsleitender Verbindung mit dem Pumpensumpf PS steht und mit einer Entsorgungsleitung EL an ein hausseitiges Abwasserentsorgungsnetz angeschlossen werden kann.

Ferner weist die Geschirrspülmaschine GS ein Sorptionstrockungssystem auf, mit dem in den Geschirrkörben GR angeordnetes und gereinigtes Spülgut am Ende eines Spülprogrammdurchlaufs getrocknet werden kann. Hierzu ist in der Bodenbaugruppe BO ein Sorptionsbehälter SB vorgesehen, der über einen Luftkanal LK mit einem Einlass EI luftleitend verbunden ist, wobei zur Erzeugung einer Zwangsdurchströmung ein Lüfter LT vorgesehen ist. Um die durch den Einlass EI angesaugte und durch den Lüfter LT in den Sorptionsbehälter beförderte Luft wieder in den Innenraum IR der Geschirrspülmaschine GS zurückzufördern ist eine Ausblasöffnung AU im Bodenbereich des Innenraums IR Geschirrspülmaschine GS vorgesehen.

Um eine Trocknung von gereinigtem Spülgut zu bewirken, wird durch den Lüfter LT Luft aus dem Innenraum IR der Geschirrspülmaschine GS angesaugt, durch den Sorptionsbehälter SB geleitet und wieder durch die Ausblasöffnung AU zurück in den Innenraum IR der Geschirrspülmaschine GS geleitet. Um hierbei die umgewälzte Luft zu Trocknen ist in dem Sorptionsbehälter SB ein Trocknungsmittel zur Durchführung einer exothermen Trocknung vorgesehen. Es handelt sich dabei um ein reversibel dehydrierbares Trocknungsmaterial, z.B. Zeolith, das auf Grund seiner hydroskopischen Eigenschaft Wasser aufnimmt, wobei zeitgleich Wärmeenergie freigesetzt wird. Durch diese freigesetzte Wärmeenergie wird eine Erwärmung der umgewälzten Luft bewirkt, was zugleich das Feuchtigkeitsaufnahmevermögen der umgewälzten Luft erhöht. Am Ende eines Trocknungsvorgangs ist eine Flüssigkeitsmenge, in dem Trocknungsmaterial ZEO gespeichert.

Um das Aufnahmevermögen des Trocknungsmittels ZEO für einen erneuten Spülprogrammdurchlauf wieder herzustellen, ist eine Luftheizung HZ vorgesehen, die im vorliegenden Ausführungsbeispiel in dem Sorptionsbehälter SB angeordnet ist. Es ist jedoch auch möglich, eine Luftheizung außerhalb des Sorptionsbehälters SB anzuordnen, z.B. in dem Luftkanal LK, um eine Erwärmung der in den Sorptionsbehälter SB geförderten Luft zu bewirken. Um die in den Trocknungsmaterial ZEO gespeicherte Flüssigkeitsmenge auszutreiben, wird eine mit dem Lüfter LT erzeugte Luftströmung erwärmt, so dass das Trocknungsmaterial ZEO auf Temperaturen erhitzt werden kann, bei denen die in dem Trocknungsmaterial ZEO gespeicherte Wassermenge wieder freigesetzt werden kann.

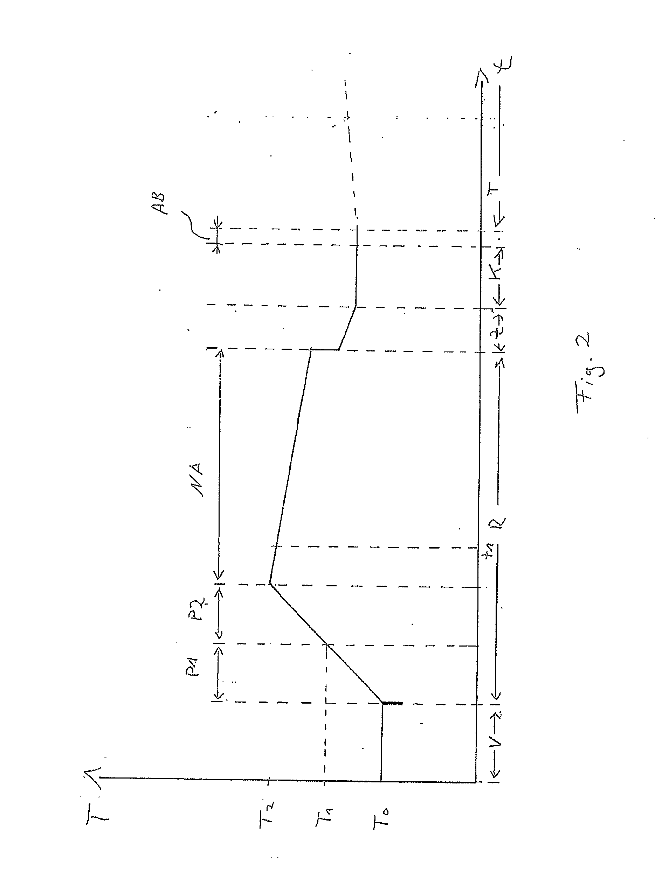

Es wird nun zusätzlich auf die Figuren 2 bis 4 Bezug genommen.

Geschirrspülmaschinen GS durchlaufend zur Reinigung und Trocknung von zu reinigendem Spülgut, Spülprogramme, die aus einer Mehrzahl von Programmschritten bestehen, die nacheinander durchlaufen werden. Ein derartiges Programm kann aus den Programmschritten Vorspülen V, Reinigen R, Zwischenspülen Z, Klarspülen K und Trocknen T bestehen, wobei einzelne Programmschritte, wie z. B. das Vorspülen V oder Zwischenspülen Z auch ausgeblendet werden können, während es auch denkbar ist, einzelne Programmschritte mehrfach zu durchlaufen, wie z.B. das Zwischenspülen Z. Während des Vorspülens V wird bspw. Spülgut mit Wasser ohne Zugabe von Reinigungsmitteln beaufschlagt, wobei dies entweder mit nicht erwärmten Wasser oder mit mittels einer Heizung erwärmten Wasser durchgeführt wird. Hierzu kann Wasser verwendet werden, dass in einem Wassertank (nicht dargestellt) gespeichert wurde. Ein derartiger Wassertank kann mit der Umgebung der Geschirrspülmaschine in wärmeleitender Verbindung stehen, so dass in dem Wassertank zwischengespeicherte Flüssigkeit, wie z.B. Wasser aus einem hausseitigen Versorgungssystem, sich auf Raumtemperatur erwärmen kann. In dem Reinigungsschritt R erfolgt eine Reinigung von Spülgut durch Beaufschlagung von mit Reinigungsmitteln versetztem Wasser, d.h. während des Reinigungsschritts erfolgt eine Reinigungsmittelzugabe. Ferner erfolgt eine Erwärmung der Flüssigkeit, um so die Reinigungswirkung des Reinigungsmittels zu steigern. Dabei setzt sich der Reinigungsschritt R aus einer Heizphase P1, P2 zusammen, in der die Flüssigkeit in der Geschirrspülmaschine GS mittels Heizmitteln erwärmt wird, bis eine vorgegebene Maximaltemperatur erreicht ist und einer anschließenden Nachwaschphase zusammen, während der bei ausgeschalteten Heizungsmittel die sich langsam abkühlende Flüssigkeit mittels der Umwälzpumpe UP umgewälzt wird. In dem Programmschritt Zwischenspülen Z wird das Spülgut mit Flüssigkeit beaufschlagt, um so Schmutzreste aus der Geschirrspülmaschine GS zu fördern. Der nächste Programmschritt ist das Klarspülen K zur Vorbereitung des Programmschritts Trocknen T, bei dem mit Klarspülmittel versetztes Wasser mittels der Umwälzpumpe umgewälzt und über die Sprüharme SA auf das nun gereinigte Spülgut aufgebracht wird. Abschließend erfolgt der Programmschritt Trocknen T, in dem das Spülgut nicht mehr mit Flüssigkeit beaufschlagt wird, sondern durch Betrieb des Lüfters LT eine durch den Innenraum IR der Geschirrspülmaschine GS und dem Sorptionsbehälter SB zirkulierende Luftströmung erzeugt wird. Zwischen den einzelnen Programmschritten kann ein vollständiger oder wenigstens teilweiser Flüssigkeitswechsel durchgeführt werden, d.h., die Geschirrspülmaschine GS wird mittels der Laugenpumpe LP und der Entsorgungsleitung EL entleert und durch eine zu einem hausseitigen Versorgungssystem eine Verbindung herstellende Versorgungsleitung (nicht dargestellt) wieder neu befüllt werden.

Bei dem Spülprogrammablauf gemäß Figur 2 erfolgt nur in dem Programmschritt Reinigen R eine Erwärmung von Flüssigkeit. Dabei wird ausgehend von einer Starttemperatur T0 zuerst während einer ersten Phase P1 die mit der Umwälzpumpe UP umgewälzte Flüssigkeit durch die Luftheizung HZ in dem Sorptionsbehälter SB auf eine maximale Temperatur T1 erwärmt, wobei zugleich der Lüfter LT eine durch den Innenraum IR der Geschirrspülmaschine GS zirkulierende Luftströmung erzeugt. Durch die Luftheizung HZ wird das Trocknungsmaterial ZEO in den Sorptionsbehälter SB auf Temperaturen erhitzt, bei denen die in dem Trocknungsmaterial ZEO gespeicherte Wassermenge aus dem Trocknungsmaterial ZEO ausgetrieben und durch die Ausblasöffnung AU in dem Innenraum IR Geschirrspülmaschine GS gefördert wird. Durch die Wirkung der Luftheizung HZ ist diese Flüssigkeitsmenge aufgeheizt und bewirkt somit durch die Vermischung der bereits mit der Umwälzpumpe UP umgewälzten Flüssigkeit eine Erwärmung der Gesamtflüssigkeitsmenge im Innenraum IR Geschirrspülmaschine GS. Dadurch, dass mittels der Luftheizung HZ während des Programmschritts Reinigen R eine Aufheizung bis auf die erste Temperatur T1 erfolgt, ist sichergestellt, dass das Trockenmaterial ZEO durch die Umwälzung von verhältnismäßig kalter und trockener Luft aus dem Innenraum IR Geschirrspülmaschine GS zuverlässig und vollständig desorbiert werden kann. Anstelle eines starren Spülprogrammablaufs, bei dem bei einem ersten Programmabschnitt, bei dem eine Erwärmung von Flüssigkeit erfolgt, ein Desorptionsvorgang durchgeführt wird, kann es auch in einem alternativen Ausführungsbeispiel vorgesehen sein, den Desorptionsvorgang beeinflussende Parameter zur Bestimmung des Zeitpunktes zur Durchführung der Desorption auszuwerten. Hierbei kann es sich die Lufttemperatur und die Wasserzulauftemperatur handeln. Beispielsweise kann ein Desorptionsvorgang in einem Programmschritt Reinigen oder Klarspülen oder auch, wenn dies zweckmäßig ist, während des Programmschritts Vorspülen erfolgen.

Während des Desorbierens mittels der Luftheizung HZ wird die Ausblasöffnung AU in dem Innenraum IR Geschirrspülmaschine GS gekühlt, um so sicherzustellen, dass es auf Grund der Heizleistung der Luftheizung HZ zu keiner übermäßigen Erwärmung der Ausblasöffnung HZ mit Überhitzungsschäden kommt.

Hierzu wird während des Betriebs der Luftheizung HZ, d.h. z.B. während der Phase P1, die Umwälzpumpe UP betrieben, so dass durch die Umwälzpumpe Flüssigkeit von dem Pumpensumpf PS durch die Zuführleitung zu dem Sprüharm SA gefördert wird. Hierdurch werden die Sprüharme SA in Rotation versetzt und bewirken durch Besprühen der Ausblasöffnung AU, insbesondere einer die Ausblasöffnung AU abdeckenden Kappe mit Flüssigkeit, eine Kühlung derselben.

In einer nächsten Phase P2 des Programmschritts Reinigen R wird mittels der Wasserheizung WZ die Flüssigkeitsmenge ausgehend von der ersten Temperatur T1 auf die zweite Temperatur T2 aufgeheizt.

Um die Reinigungswirkung während des Programmschritts Reinigen R zu erhöhen, ist vorgesehen durch Erhöhung der Drehzahl der Umwälzpumpe UP den Sprühdruck der aus dem Sprüharm SA austretenden Wasserstrahlen zu steigern. Hierzu wird während des Programmschritts Reinigen R während der Nachwaschphase NA die mittels der Umwälzpumpe UP umgewälzte Flüssigkeitsmenge durch einen Nachfüllschritt erhöht, bspw. zum Zeitpunkt t1 (vgl. Figur 2) und anschließend die Drehzahl der Umwälzpumpe UP erhöht, z.B. kontinuierlich, bis die Umwälzpumpe wieder unter Rundlaufbedingung läuft, d.h., während des Betriebs keine Luftblasen ansaugt, was die Förderleistung der Umwälzpumpe UP reduziert und zu einer unerwünschten Geräuschentwicklung führt. Hierdurch wird es möglich, die während des Desorbierens freigesetzte Flüssigkeitsmenge, die im Trocknungsmaterial ZEO gespeichert war, bei der Bemessung der nachzufüllenden Flüssigkeitsmenge zu berücksichtigen und somit den Gesamtwasserbedarf bei verbesserter Reinigungsleistung zu reduzieren.

Zwischen dem Programmschritt Klarspülen K und dem Programmschritt Trocknen T ist eine Abtropfphase AB vorgesehen (vgl. Figur 2), während der am gereinigten Spülgut anhaftende Flüssigkeit, d.h. mit Klarspüler versetztes Wasser, schwerkraftbedingt von dem Spülgut ablaufen kann und sich in den Pumpensumpf PS des Innenraums IR der Geschirrspülmaschine GS sammeln kann. Hierdurch wird die von dem Sorptionstrocknungsystem aufzunehmende Flüssigkeitsmenge reduziert und damit die Dauer des Programmschritt Trocknen T.

Vor dieser Abtropfphase AB, d.h. am Ende des Programmschritts Klarspülen K, erfolgt ein Abpumpvorgang, bei dem die mit Klarspüler versetzte Flüssigkeit mittels der Laugenpumpe LP durch die Entleerungsleitung EL in ein hausseitiges Abwasserentsorgungssystem gefördert wird. Es folgt die Abtropfphase AB, während der weder die Umwälzpumpe UP noch die Laugenpumpe LP sowie auch nicht der Lüfter LT oder eine der genannten Heizungen HZ, WZ in Betrieb sind. Nach Ablauf dieser Abtropfphase AB beginnt der Programmschritt Trocknen T durch Inbetriebnahme des Lüfters LT, so dass eine durch den Innenraum IR der Geschirrspülmaschine und dem Sorptionsbehälter SB zirkulierende Luftströmung erzeugt wird, um das gereinigte Spülgut in den Geschirrkörben GK zu trocknen. Am Ende des Programmschritts Trocknen T erfolgt ein weiterer Abpumpvorgang mittels der Laugenpumpe LP, mittels dem eine verbleibende Flüssigkeitsmenge aus der Geschirrspülmaschine GS durch die Entleerungsleitung EL in ein hausseitiges Abwasserentsorgungssystem gefördert wird. Alternativ hierzu kann auch vorgesehen sein, einen weiteren Abpumpvorgang zusätzlich oder alternativ zu Beginn des Programmschritts Trocknen T durchzuführen.

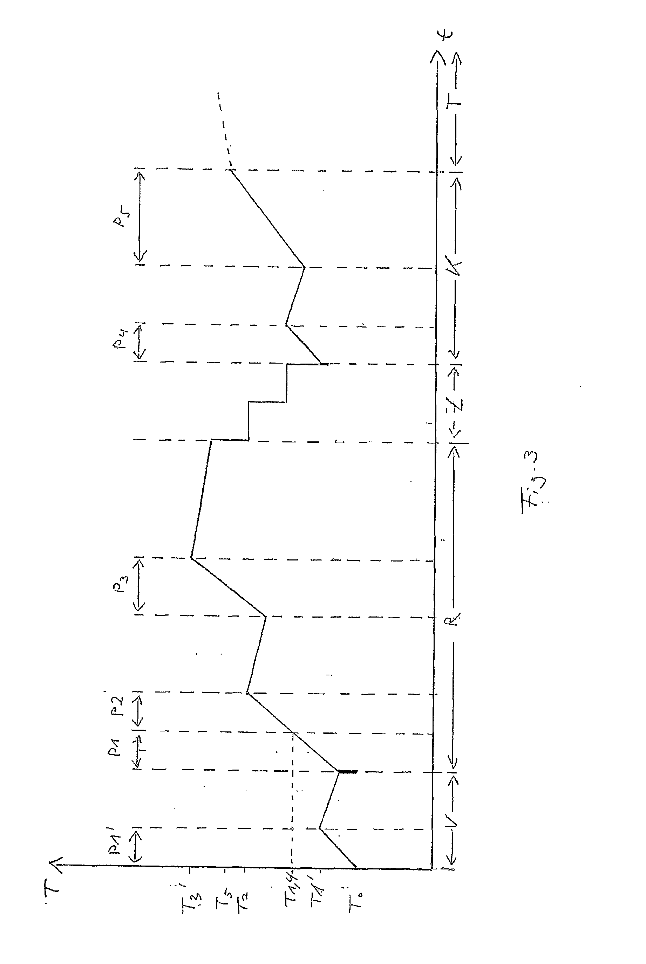

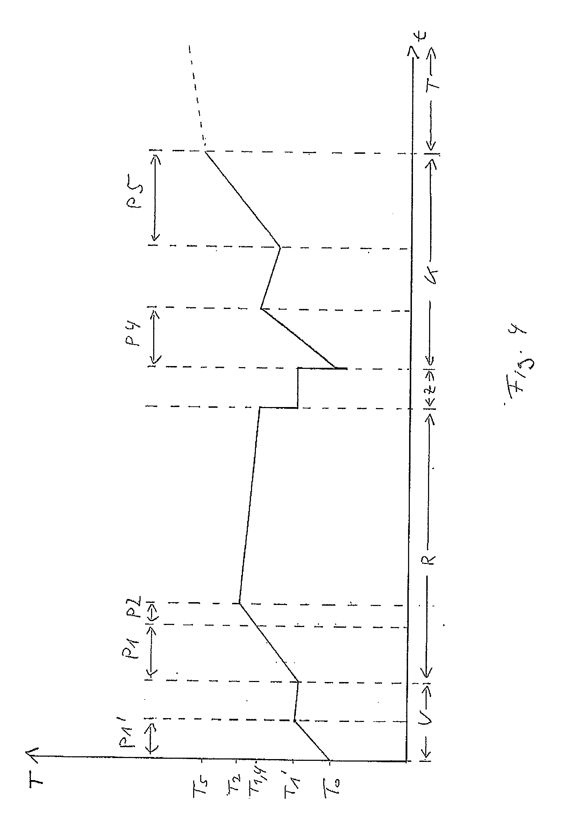

Bei dem Spülprogramm gemäß Figur 3 und 4 erfolgt eine Erwärmung von Flüssigkeit im ersten der Programmschritte, dem Programmschritt Vorspülen V. Hierzu wird mittels der Luftheizung HZ Flüssigkeit ausgehend von einer Starttemperatur T0 während einer Phase P1' auf eine Temperatur T1' erwärmt, in dem wie oben beschrieben mittels des Lüfters LT eine durch den Innenraum IR der Geschirrspülmaschine GS und dem Sorptionsbehälter SB zirkulierende Luftströmung erzeugt wird. Nach Erreichen der Temperatur T1' wird die Luftheizung HZ deaktiviert. Zu diesem Zeitpunkt ist das Trocknungsmaterial ZEO noch nicht vollständig desorbiert ist, d.h. in dem Trocknungsmaterial ZEO ist eine Restwassermenge gespeichert. Um diese Restwassermenge aus dem Trocknungsmaterial ZEO auszutreiben und somit ein wieder voll wasseraufnahmefähiges Trocknungsmaterial ZEO zu Beginn des Programmschritts Trocknen T zur Verfügung zu haben, wird im nachfolgenden Programmschritt Reinigen R zuerst die Flüssigkeit mittels der Luftheizung HZ auf eine Temperatur T1 aufgeheizt und anschließend durch Betrieb der Wasserheizung auf die Temperatur T2 aufgeheizt. Das heißt, die Desorptionsphase des Trocknungsmittels ZEO im Sorptionsbehälter SB ist in diesem Ausführungsbeispiel zweigeteilt und verteilt sich auf zwei Programmschritte, nämlich dem Programmschritt Vorspülen V und dem Programmschritt Reinigen R.

Um die Reinigungswirkung durch eine weitere Erhöhung der Temperatur zu steigern, kann eine weitere Phase P3 (vgl. Figur 3) vorgesehen sein, während der mit der Wasserheizung WZ eine weitere Erwärmung der Flüssigkeit auf eine Temperatur T3 erfolgt.

Um das Trocknungsergebnis am Ende des Programmschritts Trocknen T zu verbessern, ist bei den Ausführungsbeispielen gemäß den Figuren 3 und 4 vorgesehen, dass während des Klarspülschritts K eine Erwärmung der Flüssigkeit erfolgt. Hierzu wird während einer Phase P4 mittels der Wasserheizung WZ Flüssigkeit, bei der es sich um Wasser oder um mit Klarspüler versetztes Wasser handelt, auf eine Temperatur T4 aufgeheizt. Alternativ kann hierzu anstelle der Wasserheizung auch die Luftheizung HZ verwendet werden, um z.B. eine bisher im Programmverlauf nicht vollständig erfolgte Desorption zu vollenden. Zusätzlich kann während einer weiteren Phase P5 eine weitere Erwärmung der Flüssigkeit auf eine Temperatur T5 erfolgen, um die Trocknung mit der Sorptionstrocknungssystem zu verbessern.

### Bezugszeichenliste

- AB: Abtropfphase
- AU: Ausblassöffnung
- BO: Bodenbaugruppe
- EI: Einlass
- EL: Entsorgungsleitung
- GK: Geschirrkorb
- GS: Geschirrspülmaschine
- HZ: Luftheizung
- IR: Innenraum
- LK: Luftkanal
- LP: Laugenpumpe
- LT: Lüfter
- NA: Nachwaschphase
- P1': Phase 1'
- P1: Phase 1
- P2: Phase 2
- P3: Phase 3
- P4: Phase 4
- P5: Phase 5
- PS: Pumpensumpf
- SA: Sprüharm
- SB: Sorptionsbehälter
- t1: Nachfüllzeitpunkt
- T0: Starttemperatur
- T1': Temperatur
- T1: Temperatur
- T2: Temperatur
- T3: Temperatur
- T4: Temperatur
- T5: Temperatur
- UP: Umwälzpumpe
- WZ: Wasserheizung
- ZEO: Trocknungsmaterial
- ZL: Zuführleitung

## Patentansprüche

1. Verfahren zum Betreiben einer Geschirrspülmaschine (GS), insbesondere einer Haushalts-Geschirrspülmaschine, bei dem mit einem ersten Heizmittel (HZ) Flüssigkeit wenigstens zweimal erwärmt wird, wobei als erstes Heizmittel (HZ) eine Luftheizung (HZ) verwendet wird und bei dem Verfahren eine Mehrzahl von Programmschritten (V, R, Z, K, T) durchlaufen werden, wobei das erste Heizmittel (HZ) wenigstens zeitweise während wenigstens zwei Programmschritten (V, R, K) betrieben wird, **dadurch gekennzeichnet, dass**
eine Desorptionsphase eines reversibel dehydrierbaren Trocknungsmittels (ZEO), insbesondere Zeolith (ZEO), eines Sorptionstrocknungssystems auf wenigstens zwei Programmschritte (V, R, K) verteilt wird, und während eines Klarspülschritts (K) eine Erwärmung der Flüssigkeit durch das erste Heizmittel (HZ) erfolgt, wodurch eine bisher in einem Programmverlauf nicht vollständig erfolgte Desorption vollendet werden kann.

2. Verfahren nach Anspruch 1, **dadurch gekennzeichnet, dass** als ein zweites Heizmittel (WZ) eine Wasserheizung (WZ) verwendet wird.

3. Verfahren zum Betreiben einer Geschirrspülmaschine (GS), insbesondere einer Haushalts-Geschirrspülmaschine, bei dem mit einem ersten Heizmittel (HZ) Flüssigkeit wenigstens zweimal erwärmt wird, wobei als erstes Heizmittel (HZ) eine Luftheizung (HZ) verwendet wird und bei dem Verfahren eine Mehrzahl von Programmschritten (V, R, Z, K, T) durchlaufen werden, wobei das erste Heizmittel (HZ) wenigstens zeitweise während wenigstens zwei Programmschritten (V, R, K) betrieben wird,
**dadurch gekennzeichnet, dass**
eine Desorptionsphase eines reversibel dehydrierbaren Trocknungsmittels (ZEO), insbesondere Zeolith (ZEO), eines Sorptionstrocknungssystems auf wenigstens zwei Programmschritte (V, R, K) verteilt wird,
wobei als ein zweites Heizmittel (WZ) eine Wasserheizung (WZ) verwendet wird und das zweite Heizmittel (WZ) wenigstens zeitweise während wenigstens zwei Programmschritten (V, R, K) betrieben wird.

4. Verfahren nach Anspruch 3, **dadurch gekennzeichnet, dass** während eines Klarspülschritts (K) eine Erwärmung der Flüssigkeit durch das erste Heizmittel (HZ) erfolgt, wodurch eine bisher in einem Programmverlauf nicht vollständig erfolgte Desorption vollendet werden kann

5. Verfahren nach einem der Ansprüche 1 bis 4, **dadurch gekennzeichnet, dass** bei dem Verfahren eine Mehrzahl von Programmschritten (V, R, Z, K, T) durchlaufen werden, wobei das erste Heizmittel (HZ) wenigstens zeitweise während wenigstens eines Programmschritts (V, R, K) wenigstens zweimal betrieben wird.

6. Verfahren nach einem der Ansprüche 2 bis 5, **dadurch gekennzeichnet, dass** das zweite Heizmittel (WZ) nur wenigstens zeitweise während eines Programmschritts (R) betrieben wird.

7. Verfahren nach einem der Ansprüche 5 oder 6, **dadurch gekennzeichnet, dass** zwischen den wenigstens zwei Programmschritten (V, R, K) wenigstens ein wenigstens teilweiser Flüssigkeitswechsel durch Abpumpen und Neubefüllen erfolgt.

8. Verfahren nach einem der Ansprüche 1 bis 7, **dadurch gekennzeichnet, dass** als erster Programmschritt ein Vorspülen (V) mit Reinigungswirkung ohne Reinigerzugabe und als zweiter Programmschritt ein Reinigen (R) mit Reinigerzugabe und Reinigungswirkung durchgeführt wird.

9. Verfahren nach einem der Ansprüche 1 bis 7, **dadurch gekennzeichnet, dass** als erster Programmschritt ein Reinigen (R) mit Reinigerzugabe und Reinigungswirkung und als zweiter Programmschritt ein Klarspülen (K) mit Klarspülerzugabe durchgeführt wird.

10. Verfahren nach einem der Ansprüche 1 bis 9, **dadurch gekennzeichnet, dass** mit dem ersten Heizmittel (HZ) Flüssigkeit auf eine maximale Temperatur im Wesentlichen zwischen 35°C bis 50°C, insbesondere zwischen 40°C bis 45°C, aufgeheizt wird.

11. Verfahren nach einem der Ansprüche 1 bis 10, **dadurch gekennzeichnet, dass** mit dem zweiten Heizmittel (WZ) Flüssigkeit auf eine maximale Temperatur im Wesentlichen zwischen 45°C bis 80°C, insbesondere zwischen 55°C bis 75°C, aufgeheizt wird.

12. Verfahren nach einem der Ansprüche 1 bis 11, **dadurch gekennzeichnet, dass** die Betriebsdauer des ersten Heizmittels (HZ) während des ersten Programmschritts (V, R, K) zwei bis sechs, insbesondere drei bis vier mal so lang wie während des zweiten Programmschritts (R, K) ist.

13. Geschirrspülmaschine (GS), insbesondere Haushalts-Geschirrspülmaschine, mit einem ersten Heizmittel (HZ) mit dem eine Flüssigkeit wenigstens zweimal erwärmbar ist, wobei das erste Heizmittel (HZ) als Luftheizung (HZ) ausgebildet ist und die Flüssigkeit bei wenigstens zwei Programmschritten (V, R, K) von einer Mehrzahl von Programmschritten (V, R, Z, K, T) erwärmbar ist, wobei das erste Heizmittel (HZ) wenigstens zeitweise während der wenigstens zwei Programmschritte (V, R, K) betreibbar ist, **dadurch gekennzeichnet, dass**
eine Desorptionsphase eines reversibel dehydrierbaren Trocknungsmittels (ZEO), insbesondere Zeolith (ZEO), eines Sorptionstrocknungssystems der Geschirrspülmaschine (GS) auf wenigstens zwei Programmschritte (V, R, K) verteilt ist,
und bei einem Klarspülschritt (K) eine Erwärmung der Flüssigkeit mittels des ersten Heizmittels (HZ) erfolgt, wobei eine bisher in einem Programmverlauf nicht vollständig erfolgte Desorption vollendbar ist.

14. Geschirrspülmaschine (GS), insbesondere Haushalts-Geschirrspülmaschine, mit einem ersten Heizmittel (HZ) mit dem eine Flüssigkeit wenigstens zweimal erwärmbar ist, wobei das erste Heizmittel (HZ) als Luftheizung (HZ) ausgebildet ist und die Flüssigkeit bei wenigstens zwei Programmschritten (V, R, K) von einer Mehrzahl von Programmschritten (V, R, Z, K, T) erwärmbar ist, wobei das erste Heizmittel (HZ) wenigstens zeitweise während der wenigstens zwei Programmschritte (V, R, K) betreibbar ist, **dadurch gekennzeichnet, dass**
eine Desorptionsphase eines reversibel dehydrierbaren Trocknungsmittels (ZEO), insbesondere Zeolith (ZEO), eines Sorptionstrocknungssystems der Geschirrspülmaschine (GS) auf wenigstens zwei Programmschritte (V, R, K) verteilt ist,
wobei ein zweites Heizmittel (WZ) der Geschirrspülmaschine (GS) als eine Wasserheizung (WZ) ausgebildet ist und das zweite Heizmittel (WZ) wenigstens zeitweise während wenigstens zwei Programmschritten (V, R, K) betreibbar ist.

15. Geschirrspülmaschine (GS) nach Anspruch 13 oder 14, **dadurch gekennzeichnet, dass** die Geschirrspülmaschine (GS) derart ausgebildet ist, dass mittels der Geschirrspülmaschine (GS) ein Verfahren nach einem der Ansprüche 1 bis 12 durchführbar ist und/oder durchgeführt wird.

## Claims

1. Method for operating a dishwasher (GS), in particular a household dishwasher, in which liquid is heated at least twice with a first heating means (HZ), with an air heater (HZ) being used as a first heating means (HZ) and in the method a plurality of program steps (V, R, Z, K, T) being run, with the first heating means (HZ) being operated at least temporarily during at least two program steps (V, R, K), **characterised in that**
a desorption phase of a reversibly dehydrodenisable drying material (ZEO), in particular zeolite (ZEO), of a sorption drying system is distributed among at least two program steps (V, R, K),
and during a rinse-aid program step (K) the liquid is heated by the first heating means (HZ), as a result of which a desorption which was previously incomplete in the program cycle can be achieved.

2. Method according to claim 1, **characterised in that** a water heater (WZ) is used as a second heating means (WZ).

3. Method for operating a dishwasher (GS), in particular a household dishwasher, in which liquid is heated at least twice with a first heating means (HZ), with an air heater (HZ) being used as a first heating means (HZ) and in the method a plurality of program steps (V, R, Z, K, T) being run, with the first heating means (HZ) being operated at least temporarily during at least two program step (V, R, K), **characterised in that**
a desorption phase of a reversibly dehydrodenisable drying material (ZEO), in particular zeolite (ZEO), of a sorption drying system is distributed among at least two program steps (V, R, K),
with a water heater (WZ) being used as a second heating means (WZ) and the second heating means (WZ) being operated at least temporarily during at least two program steps (V, R, K).

4. Method according to claim 3, **characterised in that** during a rinse-aid program step (K) the liquid is heated by the first heating means (HZ), as a result of which a desorption which was previously incomplete in the program cycle can be achieved.

5. Method according to one of claims 1 to 4, **characterised in that** in the method, a plurality of program steps (V, R, Z, K, T) is run, with the first heating means (HZ) being operated at least twice at least temporarily during at least one program step (V, R, K).

6. Method according to one of claims 2 to 5, **characterised in that** the second heating means (WZ) is only operated at least temporarily during a program step (R).

7. Method according to one of claims 5 or 6, **characterised in that** at least one at least partial change in liquid takes place between the at least two program steps (V, R, K) by means of pumping and refilling.

8. Method according to one of claims 1 to 7, **characterised in that** a pre-rinsing (V) with cleaning action and without the addition of detergent is implemented as a first program step and a cleaning (R) with the addition of detergent and cleaning action is implemented as a second program step.

9. Method according to one of claims 1 to 7, **characterised in that** a cleaning (R) with the addition of detergent and cleaning action is implemented as a first program step and a rinsing with rinse-aid (K) with the addition of rinse-aid is implemented as a second program step.

10. Method according to one of claims 1 to 9, **characterised in that** liquid is heated to a maximum temperature of essentially between 35 to 50°C, in particular between 40 to 45°C, with the first heating means (HZ).

11. Method according to one of claims 1 to 10, **characterised in that** liquid is heated to a maximum temperature of essentially between 45 to 80°C, in particular between 55 to 75°C with the second heating means (WZ).

12. Method according to one of claims 1 to 11, **characterised in that** the period of operation of the first heating means (HZ) during the first program step (V, R, K) is two to six, in particular three to four times as long as during the second program step (R, K).

13. Dishwasher (GS), in particular a household dishwasher, having a first heating means (HZ), with which liquid can be heated at least twice, with the first heating means (HZ) being embodied as an air heater (HZ) and the liquid able to be heated with at least two program steps (V, R, K) of a plurality of program steps (V, R, Z, K, T), with the first heating means (HZ) being operable at least temporarily during the at least two program steps (V, R, K), **characterised in that**
a desorption phase of a reversibly dehydrodenisable drying material (ZEO), in particular zeolite (ZEO), of a sorption drying system of the dishwasher (GS) is distributed among at least two program steps (V, R, K),
and during a rinse-aid program step (K) the liquid is heated by the first heating means (HZ), with a desorption which was previously incomplete in the program cycle being achievable.

14. Dishwasher (GS), in particular a household dishwasher, having a first heating means (HZ), with which liquid can be heated at least twice, with the first heating means (HZ) being embodied as an air heater (HZ) and the liquid able to be heated with at least two program steps (V, R, K) of a plurality of program steps (V, R, Z, K, T), with the first heating means (HZ) being operable at least temporarily during the at least two program steps (V, R, K), **characterised in that**
a desorption phase of a reversibly dehydrodenisable drying material (ZEO), in particular zeolite (ZEO), of a sorption drying system of the dishwasher (GS) is distributed among at least two program steps (V, R, K),
with a second heating means (WZ) of the dishwasher (GS) being embodied as a water heater (WZ) and the second heating means (WZ) being operated at least temporarily during at least two program steps (V, R, K).

15. Dishwasher (GS) according to claim 13 or 14, **characterised in that** the dishwasher (GS) is embodied such that by means of the dishwasher (GS) a method according to one of claims 1 to 12 can be carried out and/or is carried out.

## Revendications

1. Procédé d'exploitation d'un lave-vaisselle (GS), en particulier d'un lave-vaisselle ménager, dans lequel un premier moyen de chauffage (HZ) chauffe au moins deux fois le fluide, dans lequel un chauffage à air (HZ) est utilisé comme premier moyen de chauffage (HZ) et dans lequel procédé une pluralité d'étapes de programme (V, R, Z, K, T) sont parcourues, le premier moyen de chauffage (HZ) étant exploité au moins par intermittence durant au moins deux étapes de programme (V, R, K), **caractérisé en ce qu'**une phase de désorption d'un moyen de séchage déshydrogénable réversible (ZEO), en particulier de la zéolithe (ZEO), d'un système de séchage par sorption est répartie sur au moins deux étapes de programme (V, R, K), et **en ce que** le premier moyen de chauffage (HZ) chauffe le fluide durant une étape de rinçage (K), ce qui permet de terminer une désorption jusqu'à présent incomplète dans un déroulement de programme.

2. Procédé selon la revendication 1, **caractérisé en ce qu'**un chauffage à eau (WZ) est utilisé comme deuxième moyen de chauffage (WZ).

3. Procédé d'exploitation d'un lave-vaisselle (GS), en particulier d'un lave-vaisselle ménager, dans lequel un premier moyen de chauffage (HZ) chauffe au moins deux fois le fluide, dans lequel un chauffage à air (HZ) est utilisé comme premier moyen de chauffage (HZ) et dans lequel procédé une pluralité d'étapes de programme (V, R, Z, K, T) sont parcourues, le premier moyen de chauffage (HZ) étant exploité au moins par intermittence durant au moins deux étapes de programme (V, R, K), **caractérisé en ce qu'**une phase de désorption d'un moyen de séchage déshydrogénable réversible (ZEO), en particulier de la zéolithe (ZEO), d'un système de séchage par sorption est répartie sur au moins deux étapes de programme (V, R, K), un chauffage à eau (WZ) étant utilisé comme deuxième moyen de chauffage (WZ) et le deuxième moyen de chauffage (WZ) étant exploité au moins par intermittence durant au moins deux étapes de programme (V, R, K).

4. Procédé selon la revendication 3, **caractérisé en ce que** durant une étape de rinçage (K), le premier moyen de chauffage (HZ) chauffe le fluide, ce qui permet de terminer une désorption jusqu'à présent incomplète dans un déroulement de programme.

5. Procédé selon l'une des revendications 1 à 4, **caractérisé en ce qu'**une pluralité d'étapes de programme (V, R, Z, K, T) sont parcourues durant le procédé, dans lequel le premier moyen de chauffage (HZ) est exploité au moins par intermittence au moins deux fois durant au moins une étape de programme (V, R, K).

6. Procédé selon l'une des revendications 2 à 5, **caractérisé en ce que** le deuxième moyen de chauffage (WZ) est exploité uniquement au moins par intermittence durant une étape de programme (R).

7. Procédé selon l'une des revendications 5 ou 6, **caractérisé en ce qu'**au moins un changement au moins partiel de fluide s'opère par pompage et nouveau remplissage entre les au moins deux étapes de programme (V, R, K).

8. Procédé selon l'une des revendications 1 à 7, **caractérisé en ce que** la première étape de programme est un prélavage (V) avec effet lavant sans adjonction de produit de lavage et la deuxième étape de programme est un lavage (R) avec adjonction de produit de lavage et effet de lavage.

9. Procédé selon l'une des revendications 1 à 7, **caractérisé en ce que** la première étape de programme est un lavage (R) avec adjonction de produit de lavage et effet lavant et la deuxième étape de programme est un rinçage (K) avec adjonction de produit de rinçage.

10. Procédé selon l'une des revendications 1 à 9, **caractérisé en ce que** le premier moyen de chauffage (HZ) chauffe le fluide à une température maximale essentiellement située entre 35°C et 50°C, en particulier entre 40°C et 45°C.

11. Procédé selon l'une des revendications 1 à 10, **caractérisé en ce que** le deuxième moyen de chauffage (WZ) chauffe le fluide à une température maximale essentiellement située entre 45°C et 80°C, en particulier entre 55°C et 75°C.

12. Procédé selon l'une des revendications 1 à 11, **caractérisé en ce que** la durée d'exploitation du premier moyen de chauffage (HZ) durant la première étape de programme (V, R, K) est deux à six fois, en particulier trois à quatre fois, plus longue que durant la deuxième étape de programme (R, K).

13. Lave-vaisselle (GS), en particulier lave-vaisselle ménager, avec un premier moyen de chauffage (HZ) permettant de chauffer au moins deux fois un fluide, dans lequel le premier moyen de chauffage (HZ) est exécuté sous forme de chauffage à air (HZ) et le fluide est susceptible d'être chauffé durant au moins deux étapes de programme (V, R, K) parmi une pluralité d'étapes de programme (V, R, Z, K, T), dans lequel le premier moyen de chauffage (HZ) peut être exploité au moins par intermittence durant les au moins deux étapes de programme (V, R, K), **caractérisé en ce qu'**une phase de désorption d'un moyen de séchage déshydrogénable réversible (ZEO), en particulier de la zéolithe (ZEO), d'un système de séchage par sorption du lave-vaisselle (GS) est répartie sur au moins deux étapes de programme (V, R, K) et **en ce que** le premier moyen de chauffage (HZ) chauffe le fluide durant une étape de rinçage (K), ce qui permet de terminer une désorption jusqu'à présent incomplète dans un déroulement de programme.

14. Lave-vaisselle (GS), en particulier lave-vaisselle ménager, avec un premier moyen de chauffage (HZ) permettant de chauffer au moins deux fois un fluide, dans lequel le premier moyen de chauffage (HZ) est exécuté sous forme de chauffage à air (HZ) et le fluide est susceptible d'être chauffé durant au moins deux étapes de programme (V, R, K) parmi une pluralité d'étapes de programme (V, R, Z, K, T), dans lequel le premier moyen de chauffage (HZ) peut être exploité au moins par intermittence durant les au moins deux étapes de programme (V, R, K), **caractérisé en ce qu'**une phase de désorption d'un moyen de séchage déshydrogénable réversible (ZEO), en particulier de la zéolithe (ZEO), d'un système de séchage par sorption du lave-vaisselle (GS) est répartie sur au moins deux étapes de programme (V, R, K), un deuxième moyen de chauffage (WZ) du lave-vaisselle (GS) étant exécuté sous forme de chauffage à eau (WZ) et **en ce que** le deuxième moyen de chauffage (WZ) est susceptible d'être exploité au moins par intermittence durant au moins deux étapes de programme (V, R, K).

15. Lave-vaisselle (GS) selon la revendication 13 ou 14, **caractérisé en ce que** le lave-vaisselle (GS) est exécuté de telle manière à ce que le lave-vaisselle (GS) permette d'exécuter et/ou exécute un procédé selon l'une des revendications 1 à 12.
